# EUROPÄISCHE PATENTSCHRIFT

(11) **EP 1 922 129 B1**
(45) Veröffentlichungstag und Bekanntmachung des Hinweises auf die Patenterteilung: **29.08.2012**
(21) Anmeldenummer: 05781949.2
(22) Anmeldetag: 09.09.2005
(51) Int. Cl.: B01D 45/10

(54) **FILTERMODUL**
FILTER MODULE
MODULE FILTRANT

(43) Veröffentlichungstag der Anmeldung: 21.05.2008
(73) Patentinhaber: DEXWET USA LLC, Atlanta GA 30361 (US)
(72) Erfinder: PETELN, Erich, A-2602 Blumau (AT)
(74) Vertreter: von Eichel-Streiber, Caspar
(86) Internationale Anmeldenummer: PCT/AT2005/000359
(87) Internationale Veröffentlichungsnummer: WO 2007/028176

(56) Entgegenhaltungen:
- DE-C- 328 826
- FR-A1- 2 692 496
- US-A- 1 989 773
- US-A- 5 332 409
- US-A1- 2002 104 437
- US-A1- 2005 173 331

## Beschreibung

Die Erfindung betrifft ein Filtermodul zur Abscheidung von luftfremden Inhaltsstoffen aus Maschinenabluft, umfassend ein Filtergehäuse mit einer Eintrittsöffnung und einer Austrittsöffnung zur Durchleitung von Maschinenabluft, zumindest ein Befestigungselement zur Befestigung des Filtermoduls an einer Maschine und eine im Filtergehäuse angeordnete Filteranordnung aus zumindest zwei in Durchströmrichtung hintereinanderliegenden Filtergruppen aus stabförmigen, zueinander in einem gleichbleibenden Mittenabstand parallelen sowie mit ihrer Längsachse weitgehend quer zur Durchströmrichtung angeordneten Filterelementen mit einem Filtermedium, wobei die Filterelemente zweier benachbarter Filtergruppen zueinander parallel sind und quer zu ihren Längsachsen und zur Durchströmrichtung relativ zueinander versetzt angeordnet sind.

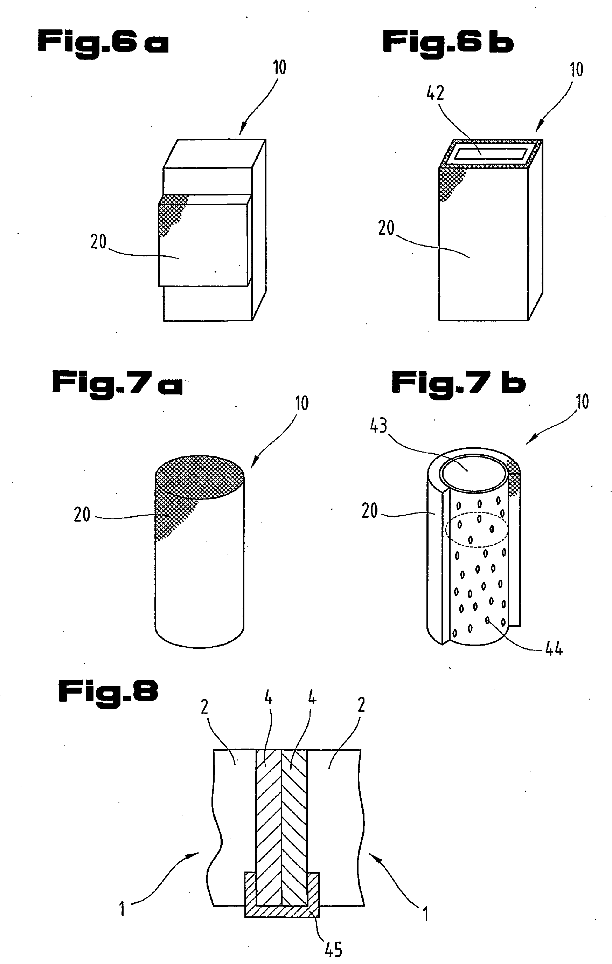

Dokument US 2002/0104437 stellt einen Filter zur Filterung von Luft dar, wobei sie zur Filterung zahlreiche stabförmige Filterelemente versieht, an denen Öl herunter laüft. Aus US 6 726 749 B2 ist eine gattungsgemäße Filtervorrichtung für die Abscheidung von luftfremden Inhaltsstoffen aus Abluft von Maschinen, insbesondere Büromaschinen bekannt. Diese weist in einem Filtergehäuse eine Vielzahl von Filterstäben auf, die aus einem Flüssigkeitsbehälter mit Flüssigkeit versorgt werden, sowie eine Halterung zur Befestigung des Filtergehäuses an einer Maschine, wobei die Filterstäbe im Abluftstrom positioniert sind. Wie in Fig. 7 der US-Schrift erkennbar, sind die Filterstäbe in einer Ausführungsform reihenförmig angeordnet und die Reihen zueinander versetzt. Die luftfremden Inhaltsstoffe werden beim Passieren von den mit Flüssigkeit benetzten Filterstäben adsorbiert und dadurch aus dem Abluftstrom abgeschieden.

Nachteilig bei diesem System ist, dass die Filterstäbe jeweils einzeln im Filtergehäuse befestigt sind und eine Wartung oder ein Austausch der Filterstäbe entsprechend mühsam und langwierig ist. Ebenfalls nachteilig ist, dass die Flüssigkeit während der Einsatzdauer der Filtervorrichtung verbraucht wird und der Flüssigkeitsbehälter zur Verlängerung der Gebrauchsdauer regelmäßig nachgefüllt werden muss um die Benetzung der Filterstäbe weiter aufrechtzuerhalten. Das Befüllen erfordert eine hohe Sorgfalt oder zusätzliche Hilfsmittel um Verunreinigungen zu vermeiden. Unabhängig von der Versorgung mit Flüssigkeit kann bei starker Verschmutzung der Filterstäbe nach längerer Gebrauchsdauer oder stark verunreinigter Maschinenabluft eine instandsetzende Reinigung oder ein Austausch der Filterstäbe oder der gesamten Filtervorrichtung erforderlich sein, was durch die einzeln befestigten Filterstäbe höhere Kosten durch erhöhten Manipulationsaufwand oder einen Komplettaustausch verursacht.

Die Aufgabe der Erfindung besteht nunmehr darin, eine gattungsgemäße Filtervorrichtung bereitzustellen, die sich durch eine weiter vereinfachte Anwendung auszeichnet und bei Herstellung und Gebrauch nur geringe Kosten verursacht.

Die Aufgabe der Erfindung wird durch ein Filtermodul gemäß den Merkmalen des Anspruchs 1 gelöst.

Als vorteilhaft bei dem erfindungsgemäßen Filtermodul erweist sich die Zusammenfassung der Filterelemente mit zumindest einem Filterträger zu mindestens einem Filtereinsatz, der vom Filtergehäuse gelöst werden kann. Der Filtereinsatz kann dadurch unabhängig vom Filtergehäuse manipuliert werden, z.B. um eine Reinigung der Filterelemente bzw. des Filtermediums leichter durchzuführen, einzelne Filterelemente zu ersetzen oder den gesamten Filtereinsatz zu tauschen. Der Filterträger kann dabei ein streifenförmiges Element sein, an dem die einzelnen Filterelemente vorzugsweise rechtwinkelig, zueinander parallel und in einem gleichbleibenden Mittenabstand befestigt sind, oder auch z.B. rahmenförmig ausgebildet sein und jeweils beide Enden der einzelnen Filterelemente fixieren. Das Filtermedium kann dabei sowohl an der äußeren Oberfläche der Filterelemente angeordnet sein, als auch im Inneren der Filterelemente, wenn das Filtermedium durch Öffnungen in der Oberfläche der Filterelemente mit der Abluft in Kontakt treten kann, beispielsweise wenn das Filterelement käfigartig ausgebildet ist.

Einen weiteren vorteilhaften Effekt erzielt man durch die Ausbildung von mehreren Filtereinsätzen, insbesondere indem mehrere Reihen von Filterelementen, vorzugsweise die einzelnen Filtergruppen mit jeweils einem eigenen Filterträger zusammengefasst sind. Die einzelnen Filterreihen bzw. Filtergruppen können dadurch unabhängig voneinander je nach Verschmutzungsgrad gereinigt oder ersetzt werden, wodurch die Kosten für den Austausch der Filtereinsätze reduziert werden, da noch gebrauchsfähige Filtereinsätze weiter verwendet werden können.

Das Versetzen der Filterelemente zweier in Durchströmrichtung hintereinanderliegender Filtergruppen um die Hälfte des Mittenabstandes gemäß einer weiteren Ausführungsform des erfindungsgemäßen Filtermoduls bewirkt, dass die Abluft beim Passieren der Filterelemente maximal umgelenkt wird und der Abscheidegrad des Filtermoduls verbessert ist.

Die Ausbildung einer Einschuböffnung für die Filtereinsätze im Filtergehäuse ermöglicht einen direkteren und besseren Zugriff auf die einzelnen Filtereinsätze, als durch die Eintrittsöffnung oder Austrittsöffnung, da diese nur einen sequentiellen Zugriff auf die einzelnen Filtereinsätze gestatten. Die Einschuböffnung kann aber auch durch eine Reihe von Öffnungen gebildet sein, durch die die einzelnen Filterelemente in das Innere des Filtergehäuses ragen, während der Filterträger außerhalb des Filtergehäuses verbleibt.

Für eine sichere Positionierung der Filtereinsätze im Filtergehäuse ist es gemäß einer Weiterbildung vorteilhaft, Führungselemente zur Sicherung der Einbaulage vorzusehen. Diese können in Form einer Längsführung ausgebildet sein, entlang der die Filtereinsätze in das Filtergehäuse eingeführt werden, oder aber auch in Form von punktuellen Führungselementen, die erst kurz vor Erreichen der richtigen Einbauposition wirksam werden.

Eine vorteilhafte Möglichkeit einen Filtereinsatz in der Einbaulage zu Positionieren besteht nach einer weiteren Ausführungsform darin, die Einschuböffnung als Führungselement zu gestalten, indem diese den Filterträger mit kleinem Spiel aufnimmt und somit eine Fixierung des eingeschobenen Filtereinsatzes quer zur Einschubrichtung erfolgt. Dabei ist es möglich, für jeden Filtereinsatz eine eigene Einschuböffnung vorzusehen oder die Filtereinsätze enganliegend durch eine gemeinsame Einschuböffnung zu platzieren.

Eine zusätzliche Form eines Führungselements kann gemäß einem weiteren Unteranspruch durch eine Ausnehmung oder Durchsetzung im Filtergehäuse gegenüber der Einschuböffnung gebildet sein, in die ein oder mehrere Filterelemente oder ein rahmenförmiger Filterträger hineinragen. Die Ausnehmung kann sich dabei auf die Gehäusewand allein beschränken oder auch durch ein hülsenförmiges, in das Innere des Filtergehäuses ragendes Aufnahmeelement gebildet sein, das einen Endabschnitt der Filterelemente oder des Filtereinsatzes aufnimmt.

Um den Versatz zwischen den Filterelementen hintereinanderliegender Filterreihen zu erzielen ist es vorteilhaft, die Führungselemente für die einzelnen Filtereinsätze gegeneinander zu versetzen. Dadurch wird die für die Reinigungswirkung erforderliche Umlenkung des Abluftstromes sichergestellt.

Aus Gründen der Wirtschaftlichkeit und auch der Anwenderfreundlichkeit ist es sinnvoll, gemäß einem weiteren Unteranspruch die eine Filteranordnung bildenden Filtereinsätze baugleich auszuführen. Dadurch ist einerseits die Herstellung durch die größeren Stückzahlen und die Lagerhaltung kostengünstiger, andererseits die Verwechslungsmöglichkeit für den Anwender reduziert.

Eine weitere Steigerung der Anwenderfreundlichkeit kann gemäß einem weiteren Ausführungsmerkmal durch eine symmetrische Ausbildung der Filtereinsätze erzielt werden. Je mehr Symmetrieebenen ein Filtereinsatz aufweist, umso geringer ist die Gefahr diesen falsch in das Filtergehäuse einzusetzen, wodurch der Filterwechsel auch von technischen Laien problemlos durchgeführt werden kann. Der Versatz zwischen den einzelnen Filtereinsätzen wird bei den Ausführungen mit zwei oder drei Symmetrieebenen durch den Versatz der Führungselemente bzw. der Einschuböffnungen bewirkt.

Durch die Ausbildung der Filterelemente nach einer weiteren Ausführungsform mit einem großen Wirkquerschnitt, d.h. dass innerhalb einer Filtergruppe die in eine Ebene normal auf die Durchströmrichtung projizierte Fläche der Filterelemente größer ist, als die in eine Ebene normal auf die Durchströmrichtung projizierte, freie Durchtrittsfläche zwischen den Filterelementen, bewirkt, dass in Zusammenwirkung mit dem Versatz zwischen den hintereinanderliegenden Filterreihen eine starke Umlenkung des Abluftstromes erfolgt und die luftfremden Inhaltsstoffe im Abluftstrom mit höherer Wahrscheinlichkeit adsorbiert werden. Eine weitere Erhöhung des Abscheidegrades kann durch die Anordnung von mehr als zwei hintereinanderliegenden Filtereinsätzen oder mehreren Filtermodulen hintereinander erreicht werden, wodurch allerdings auch der Strömungswiderstand ansteigt, was nur in einem begrenzten Ausmaß eintreten darf, um die Wärmeabfuhr der Abluft abgebenden Maschine nicht unzulässig zu beeinträchtigen.

Eine Möglichkeit Kosten für die Filtereinsätze einzusparen besteht darin, die Filterelemente gemäß einem weiteren Unteranspruch mit dem Filterträger lösbar zu verbinden, wodurch auch einzelne Filterelemente ausgetauscht werden können. Insbesondere wenn die einzelnen Filterelemente durch die Strömungsverhältnisse unterschiedlich stark mit den luftfremden Stoffen oder Staubpartikeln beladen werden, kann ein Tauschen einzelner Filterelemente vorteilhaft sein. Ebenso können die Filterelemente einzeln entfernt werden, was bei bestimmten Ausführungsformen der Filterelemente (z.B. mit sternförmigem Querschnitt) oder der Filtereinsätze die Reinigung erleichtern kann.

Gemäß einem weiteren Unteranspruch ist es vorteilhaft, dass die Filterelemente mit dem Filterträger mittels einer Presspassung verbunden sind und somit keine zusätzlichen Befestigungsmittel erforderlich sind.

Die Wahl des Werkstoffes für das Filtermedium gemäß einer beschriebenen Ausführungsform des Filtermoduls aus der Gruppe von porösem Material, faserigem Gewebe, Zellstoffmaterial oder einem Kunststoffschaum ist vorteilhaft um den Abscheidegrad des Filtermoduls positiv zu beeinflussen. Einerseits wirken die Poren und faserigen Bestandteile in diesen Materialien als zusätzliche mechanische Abscheideflächen andererseits können diese Materialien gleichzeitig als Speichermedium für eine chemisch und oder physikalisch wirksame Flüssigkeit dienen, die die luftfremden Inhaltsstoffe adsorbiert bzw. absorbiert. Das poröse Material kann z.B. durch einen keramischen oder metallischen Schaum gebildet sein, die hohe mechanische Festigkeit aufweisen und dadurch gegenüber Beschädigungen bei der Montage oder bei der Reinigung unempfindlich sind. Das faserige Gewebe aus anorganischen oder organischen und natürlichen Fasern, wie z.B. Zellulose, Zelluloseacetat, Polyester, etc. zeichnet sich ebenfalls durch hohe Filterwirkung aus. Kunststoffschäume oder Latexschaum sind als Filtermedium ebenfalls verwendbar, insbesondere offenzellige Materialien wie PU-Schaum, der vielfach als Nassfiltermedium verwendet wird. Für bestimmte Zwecke können in einer Filteranordnung auch mehrere verschiedene Filtermedien zum Einsatz kommen, um die jeweiligen vorteilhaften Eigenschaften zu kombinieren.

Durch die Ausbildung der Filterelemente aus dem gleichen Material wie das Filtermedium kann das Filtervolumen beträchtlich erhöht werden, wodurch die Gebrauchsdauer der Filtereinsätze steigen kann oder das Speichervolumen für Flüssigkeit erhöht werden kann. Weiters kann die Reduktion der Anzahl der verwendeten Materialien die Herstellkosten für die Filterelemente senken.

Von Vorteil kann bei bestimmten Ausführungen auch sein, das Filtermedium und das Filterelement einstückig auszubilden, insbesondere wenn die Festigkeit des Filtermediums ausreicht die bei Zusammenbau und Handhabung der Filtereinsätze auftretenden Kräfte ohne Beschädigung aufzunehmen, z.B. wenn das Filtermedium ausreichend verdichtet ist. Dadurch können ebenfalls die Herstellkosten bei geeigneter Materialwahl gesenkt werden.

Bei einer weiteren Ausbildungsform des Filtermoduls ist jeweils das Filtermedium nur an einem Teilabschnitt des Filterelements angeordnet. So ist es möglich, etwa das Filtermedium materialsparend nur auf der angeströmten Seite der Filterelemente vorzusehen. Weiters kann die Ausdehnung des Filtermediums auch auf einen Abschnitt im Inneren eines Filterelements beschränkt sein. Insbesondere können die Enden der Filterelemente ohne Filtermedium ausgeführt sein, um die Befestigung am Filterträger oder im Filtergehäuse durch eine Steckverbindung zu erleichtern.

Die Anordnung des Filtermediums nach einem weiteren Unteranspruch an der Oberfläche der Filterelemente bietet eine weitgehend freie Gestaltungsmöglichkeit der Form der tragenden Filterelemente, sowie eine gute Zugänglichkeit bei einer eventuellen Reinigung der Filterelemente. Komplizierte Querschnittsformen können mit den genannten Filtermedien zum Teil nur schwer hergestellt werden, weshalb in diesen Fällen eine nachträgliche Anbringung an der Oberfläche der Filterelemente leichter zu bewerkstelligen ist. Die Verbindung zwischen dem Filtermedium und den Filterelementen kann dabei mechanisch, z.B. durch Klemmen oder Umspannen des Filtermediums sowie auch durch eine eigene Klebeschicht oder Aufbringen des Filtermediums in einem klebrigen Zustand; z.B. durch Umschäumen der Filterelemente mit einer Masse, die im ausgehärteten Zustand das Filtermedium bildet.

Eine Verbesserung der Abscheidewirkung des Filtermoduls kann gemäß einem weiteren Unteranspruch durch ein Benetzen des Filtermediums mit einer Flüssigkeit ausgewählt aus der Gruppe der Flüssigkeiten Glyzerin, Silikonöl, ätherischem Öl, Paraffinöl und/oder Latexemulsion erzielt werden. Die luftfremden Inhaltsstoffe in der Abluft der Maschine, wie z.B. Staub, Feinstaub, Ultrafeinpartikel, Pollen, Sporen, Bakterien, sonstige Aerosole mit festen oder flüssigen Partikeln, im Fall einer Büromaschine insbesondere Tonerstaub und/oder Papierabrieb können beim Kontakt mit dem benetzten Filtermedium gut mechanisch gebunden sowie gasförmige Verunreinigungen wie beispielsweise Ozon, Benzol, Phenol, Kohlendioxid, Formaldehyd oder unangenehme Gerüche durch Kontakt mit der Flüssigkeit gegebenenfalls auch chemisch absorbiert und/oder neutralisiert werden. Ein vorteilhafter Effekt dieser Bestandteile besteht in einem niedrigen Dampfdruck und einer entsprechend geringen Verdunstungsrate wodurch sich eine lange Gebrauchsdauer ergibt. Die Viskosität dieser Flüssigkeiten begünstigt zusätzlich eine gleichmäßige Verteilung im Filtermedium durch die auftretende Kapillarwirkung beim Benetzen des Filtermediums. Bei entsprechend eingestellter hoher Viskosität und Oberflächenspannung ist auch eine direkte Benetzung des Filterelements möglich, wodurch das Filtermedium durch die Flüssigkeit gebildet ist.

Eine weitere mögliche Ausführung des Filtermoduls besteht darin, der Flüssigkeit eine olfaktorische Substanz beizumengen, wodurch die aus dem Filtermodul ausströmende Luft eine angenehme Geruchsempfindung auslösen kann. Durch entsprechende Einstellung der Konzentration und der Verdunstungsrate der olfaktorischen Substanz kann die Dauer der Duftabgabe an die Gebrauchsdauer der Flüssigkeit angepasst werden, wodurch die mit der Zeit nachlassende Geruchsempfindung als Indikator für einen erforderlichen Austausch der Filterelemente oder eine Erneuerung der Flüssigkeit herangezogen werden kann.

Nach einem weiteren Unteranspruch ist es auch vorteilhaft, der Flüssigkeit eine antibakterielle, -virale, -mykotische oder fungizide Substanz beizumengen, wodurch einerseits über die Maschine abgegebene Bakterien oder Pilzsporen beim Kontakt mit der Flüssigkeit unschädlich gemacht werden und andererseits die Anreicherung bzw. Besiedelung der Filterelemente mit Bakterien, Viren oder Pilzen verhindert wird.

Um eine Beeinträchtigung der Umwelt durch die Reinigung oder Entsorgung des mit der Flüssigkeit benetzten Filtermediums bzw. der Filterelemente zu vermeiden ist es möglich gemäß einem Unteranspruch zur Benetzung eine biologisch leicht abbaubare Flüssigkeit zu verwenden. Der biochemische Sauerstoffbedarf zum biologischen Abbau in Abwasser (z.B. BSB5-Wert) und die Wassergefährdungsklasse sollten möglichst niedrig sein.

Weiters ist es nach einer weiteren Ausführung des Filtermoduls vorteilhaft das Filtermedium mit einer antibakteriellen Oberfläche auszustatten. Dies kann beispielsweise durch eine Beschichtung oder Imprägnierung mit Silber, insbesondere nanoskaligem Silber, oder einer Silberverbindung erfolgen.

Nach einer weiteren Ausführungsform ist es vorteilhaft, die Flüssigkeit in Hohlräumen innerhalb der Filterelemente zu speichern und durch Öffnungen, z.B. kleine Bohrungen oder Schlitze, langsam an das Filtermedium abzugeben. Die Flüssigkeitsverluste im Filtermedium durch die Verdunstung können auf diese Weise ständig ausgeglichen werden und die Gebrauchsdauer der Filterelemente verlängert werden.

Eine mögliche Weiterbildung besteht darin, zumindest einen Teil des Filtermediums durch Aktivkohle zu bilden, die sich durch hohe Adsorptionsfähigkeit für luftfremde Gase und Geruchsstoffe auszeichnet. In der Kombination mit duftabgebenden Filterelementen sind die Filterelemente mit Aktivkohlebestandteilen im Filtermedium deshalb in Durchströmrichtung betrachtet vor den duftabgebenden Filterelementen anzuordnen.

Zur Abscheidung von ferromagnetischen Partikeln, z.B. Eisenabrieb, aus der Maschine ist gemäß einer Ausführungsform vorgesehen, ein oder mehrere Filterelemente mit einem Magnetelement oder einem magnetischen Bestandteil auszustatten. Dieses kann durch einen Dauermagnet, aber auch durch einen Elektromagneten gebildet sein.

Eine weitere Ausführungsform des Filtermoduls ist dadurch gekennzeichnet, dass die stabförmigen Filterelemente einen länglichen Querschnitt, also einen Querschnitt mit einer ausgeprägten Längsachse aufweisen. Dadurch steigt das Verhältnis von Oberfläche zu Volumen der Filterelemente, wodurch auf relativ kleinem Raum eine große Filterfläche untergebracht werden kann.

Zusätzlich ist es vorteilhaft die Längsachsen der Querschnitte gemäß einem folgenden Unteranspruch quer zur Durchströmrichtung auszurichten um große Wirkflächen und eine starke Umlenkung der Abluft zu erzielen. Durch diese Anordnung der Filterelemente kann das Filtermodul in Durchströmrichtung betrachtet auch mit mehreren hintereinanderliegenden Filtereinsätzen kurz gebaut werden.

Der Querschnitt der Filterelemente kann nach einer weiteren Ausbildung des Filtermoduls viereckig, dreieckig, sternförmig oder rund ausgeführt sein. Die viereckige, dreieckige oder runde, insbesondere kreisförmige Ausführung der Filterelemente ist fertigungstechnisch leicht herzustellen, weiters begünstigt die viereckige und kreiszylindrische Form eine symmetrische Ausbildung der Filtereinsätze. Der sternförmige Querschnitt hingegen bietet einen hohen Wert im Verhältnis von Oberfläche zu Volumen des Filterelements, wodurch auf relativ kleinem Raum eine große Filterfläche untergebracht werden kann. Die Querschnittsform kann auch dazu verwendet werden, die Strömung der Abluft durch die Filteranordnung zu beeinflussen, z.B. die Strömung durch strömungsungünstige, z.B. rechteckige Querschnitte zu verwirbeln und den Kontakt der Abluft mit dem Filtermedium zu intensivieren oder die Strömung durch strömungsgünstige, z.B. dreieckige Querschnitte zu beruhigen, falls der Abluftstrom der Maschine stark und turbulent und dadurch gegebenenfalls störend ist.

Das Befestigungselement zur Befestigung des Filtermoduls an der Abluft abgebenden Maschine kann vorteilhaft durch eine Klebstoffschicht, ein Klebeband, ein Klettband, eine Schraube, einen Steckbolzen, einen Schnappverbinder gebildet sein, wobei diese Befestigungsmöglichkeiten nur als Beispiele genannt sind und auch sonstige Befestigungsmittel verwendet werden können. Insbesondere bei der Verwendung einer Klettbandverbindung zwischen Filtergehäuse und Maschine ist eine leichte Montage und Handhabung durch den Anwender möglich. Durch die innige Verbindung zwischen dem Hakenband und dem Schlaufenband der Klettbandverbindung wird auch eine Abdichtung zwischen Maschine und Filtergehäuse bewirkt, wodurch der Abluftstrom weitgehend durch das Filtermodul geführt wird. Zur Abdichtung kann aber auch ein eigenes Dichtelement z.B. ein selbstklebender Moosgummistreifen verwendet werden.

Günstig ist es, das Befestigungselement im Bereich der Eintrittsöffnung des Filtergehäuses anzuordnen, um kleine und kostengünstige Bauteile für die Befestigung sowie eine optisch unscheinbare Befestigung zu erzielen.

Eine weitere vorteilhafte Befestigungsmöglichkeit des Filtermoduls erreicht man, wenn an der der Maschine zugewandten Rückseite des Filtergehäuses eine Nut ausgebildet ist, in der ein winkelprofilartiges Ausgleichselements eingesteckt ist und dass das Ausgleichselement mittels des Befestigungselements, vorzugsweise einer Klettbandverbindung, an der Maschine befestigt ist.

Gemäß einem weiteren Unteranspruch ist es auch vorteilhaft, das Filtergehäuse mit einem oder mehreren Verbindungselementen zur Verbindung mit zusätzlichen Filtermodulen auszustatten. Obwohl es natürlich möglich ist, die Größe eines Filtermoduls jeweils an die Abluftöffnung der Maschine anzupassen, ist es im allgemeinen wirtschaftlicher, die Filtermodule in einer einheitlichen Größe herzustellen und durch Verbindung mehrerer Filtermodule eine Filtervorrichtung passender Größe zusammenzustellen. Aufgrund der vielen verschiedenen Arten und Baugrößen der Maschinen, bei denen die Filtermodule eingesetzt werden können ist die individuelle Zusammenstellung aus einer Standardgröße zweckmäßiger als eine Vielzahl von Sonderanfertigungen.

Die Verbindung zwischen zwei Filtermodulen kann gemäß einer weiteren Ausführungsform jeweils durch einen Steckbolzen, eine Befestigungsschiene bzw. Befestigungsnut, eine Schwalbenschwanzverbindung, eine Klettverbindung gebildet sein. Es können aber auch alle sonstigen Verbindungsarten wie z.B. Kleben, Schrauben, Klemmen, Schnappverbindungen oder ähnliche eingesetzt werden.

Die Ausführung gemäß einem weiteren Anspruch, zwei Begrenzungswände zweier Filtergehäuse an ihren Kanten mit einem Klemmelement zu umfassen, kann vorteilhaft an der Vorderseite und/oder der Rückseite der Filtergehäuse erfolgen. Das Klemmelement ist beispielsweise als U-Profil ausgebildet, das beim Aufstecken durch eine Presspassung die Klemmwirkung erzielt.

Zur leichteren Handhabung der Filtereinsätze ist es weiters vorteilhaft, wenn der Filtereinsatz am Filterträger ein Griffelement aufweist, an dem der Filtereinsatz vom Anwender im eingebauten Zustand ergriffen werden kann.

Eine Herstellung der Bestandteile eines Filtermoduls, insbesondere des Filtergehäuses, des Filterträgers und/oder des Filterelements nach einem Unteranspruch im Kunststoff-Spritzgussverfahren ist besonders bei großen Stückzahlen wirtschaftlich und erzielt gleichbleibend hohe Werkstückgenauigkeiten und -qualitäten. Bei der Auswahl des dazu verwendeten Kunststoffs ist die Temperatur der Abluft zu berücksichtigen, damit im Gebrauch durch die Ablufttemperaturen keine unzulässigen Formänderungen an den Bestandteilen des Filtermoduls entstehen.

Eine leicht herstellbare Ausbildung der lösbaren Verbindung zwischen Filtereinsatz und Filtergehäuse besteht gemäß einem weiteren Anspruch darin, eine kraftschlüssige Schnappverbindung, insbesondere mit einem in eine Rastvertiefung eingreifenden, balligen Rastvorsprung vorzusehen.

Nach einer weiteren Ausführungsform kann das Filtermodul an der Austrittsöffnung, d.h. an der sichtbaren Vorderseite mit einem Abdeckgitter ausgestattet sein. Dadurch bietet sich einerseits ein Schutz vor unbeabsichtigter Berührung der Filterelemente, insbesondere wenn diese mit Flüssigkeit benetzt sind und andererseits eine optische Gestaltungsmöglichkeit für die Vorderseite des Filtermoduls. Bei lamellenartiger Ausführung der Gitterstäbe kann auch die Strömung der austretenden, gefilterten Luft beeinflusst werden, z.B. in eine bestimmte Richtung abgelenkt werden. Für die Befestigung des Abdeckgitters kommen wieder alle gängigen Befestigungsarten in Frage wie z.B. Schrauben, Klemmen, Kleben usw..

Es zeigen:
- Fig. 1: ein Filtermodul mit einem teilweise herausgezogenen Filtereinsatz in perspektivischer Darstellung;
- Fig. 2: ein Filtermodul im Aufriss geschnitten entlang der Linie II-II in Fig. 3 in vereinfachter Darstellung;
- Fig. 3: zwei Ausführungsformen des Filtermoduls im Grundriss geschnitten entlang der Linie III-III in Fig. 2 in vereinfachter, ausschnittsweiser Darstellung;
- Fig. 4: mehrere Ausführungsformen der lösbaren Verbindung zwischen einem Filtereinsatz und einem Filtergehäuse ausschnittsweise und in vereinfachter Darstellung;
- Fig. 5: Ausführungsformen von Filtereinsätzen mit einer, zwei und drei Symmetrieebenen in vereinfachter Darstellung, jeweils in Aufriss und Grundriss;
- Fig. 6: zwei Ausführungsformen eines Filterelements in vereinfachter, perspektivischer Darstellung;
- Fig. 7: zwei weitere Ausführungsformen eines Filterelements in vereinfachter, perspektivischer Darstellung;
- Fig. 8: eine Ausführungsform der Verbindung zwischen zwei Filtermodulen in vereinfachter, geschnittener Darstellung.

Einführend sei festgehalten, dass in den unterschiedlich beschriebenen Ausführungsformen gleiche Teile mit gleichen Bezugszeichen bzw. Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen Ausführungsbeispielen für sich eigenständige, erfinderische oder erfindungsgemäße Lösungen darstellen.

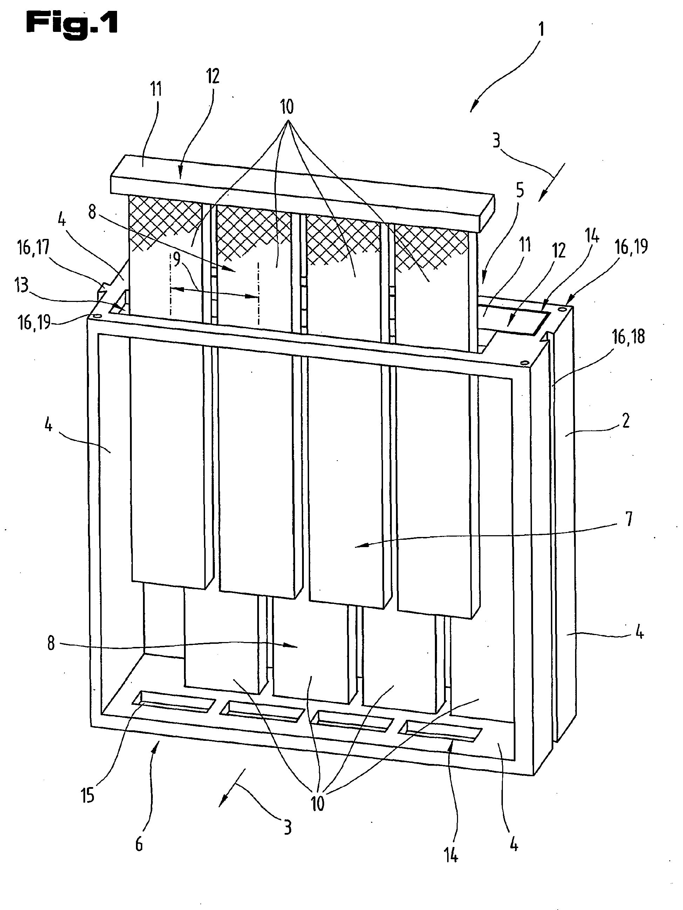

Fig. 1 zeigt eine Ausführungsform eines erfindungsgemäßen Filtermoduls 1 zur Abscheidung von luftfremden Inhaltsstoffen aus Maschinenabluft. Die Abluft kann dabei aus einer Vielzahl von verschiedenen Maschinen stammen, ein wichtiges Einsatzgebiet der erfindungsgemäßen Filtermodule 1 liegt bei Maschinen, die ihre Abluft in geschlossenen Räumen abgeben, in denen sich Personen aufhalten. Insbesondere trifft dies für Büromaschinen wie Kopierer, Drucker oder Faxgeräte zu, die vielerorts und häufig in Einsatz sind. Die luftfremden Inhaltsstoffe, die abgeschieden bzw. gefiltert werden sind Staub, Feinstaub, Ultrafeinpartikel, Pollen, Sporen, Mikroorganismen, wie z.B. Bakterien, und sonstige Aerosole mit festen oder flüssigen Partikeln, im Fall einer Büromaschine insbesondere Tonerstaub oder Papierabrieb sowie gasförmige Verunreinigungen wie beispielsweise Ozon, Benzol, Phenol, Lösemittel aus Druckfarben und Tinten, Kohlendioxid, Formaldehyd oder unangenehme Gerüche.

Folgende weitere Einsatzgebiete der erfindungsgemäßen Filtermodule seien beispielhaft für die vielfältigen Anwendungsgebiete genannt: Einbau in oder am Auslass von Abgasleitungen bzw. Schornsteinen, Verwendung als Nachrüstfilter oder Zusatzfilter für Staubsauger, Einsatz in Kraftfahrzeugen, z.B. als Ergänzung zu Luftfiltern oder als Filter für die Innenraumluft z.B. als Pollenfilter, als Industriefilter in Kraftwerksanlagen, Filter für raumlufttechnische Anlagen wir beispielsweise Klimaanlagen oder Belüftungsanlagen. Auf die mögliche Verwendung als Filter für die Zuluft, Umluft oder Ansaugluft von den verschiedensten Maschinenarten sei in diesem Zusammenhang ausdrücklich hingewiesen.

Der Grundkörper des Filtermoduls 1 ist durch ein Filtergehäuse 2 gebildet, das zur Durchleitung der Abluft einer Maschine ausgebildet ist. Die Abluftströmung bzw. die Durchströmrichtung 3 der Abluft ist durch einen Pfeil 3 dargestellt. Das Filtergehäuse 2 ist in der dargestellten Ausführung als rechteckiger Rahmen mit vier Begrenzungswänden 4 ausgebildet, kann jedoch in Durchströmrichtung 3 betrachtet einen anderen, z.B. kreisförmigen Querschnitt sowie eine größere Ausdehnung aufweisen, und somit rohrförmig ausgebildet sein. Weiters kann der Querschnitt in Durchströmrichtung 3 gleichbleibend oder veränderlich sein. Die Abluft strömt durch eine Eintrittsöffnung 5 zu einer Austrittsöffnung 6 des Filtergehäuses 2, wobei diese einen möglichst großen freien Querschnitt zur verlustarmen Durchleitung bieten.

Die Filterung der Abluft erfolgt durch eine im Inneren des Filtergehäuses 2 angeordnete Filteranordnung 7, die aus zumindest zwei, in Durchströmrichtung 3 hintereinanderliegenden Filtergruppen 8 gebildet ist. Jede Filtergruppe 8 besteht aus mehreren stabförmigen, zueinander in einem gleichbleibenden Mittenabstand 9 parallelen sowie mit ihren Längsachsen weitgehend quer zur Durchströmrichtung 3 angeordneten Filterelementen 10. Weiters sind die Filterelemente 10 von zumindest zwei benachbarten Filtergruppen 8 zueinander parallel. Bei mehr als zwei Filtergruppen 8 in einer Filteranordnung 7 können eine oder mehrere Filtergruppen 8 auch von den zwei benachbarten und parallelen Filtergruppen 8 abweichende Orientierungen der Filterelemente 10 aufweisen.

Unabhängig von dieser Einteilung in hintereinanderliegende Filtergruppen 8 sind jeweils mehrere Filterelemente 10 mit einem Filterträger 11 zu einem Filtereinsatz 12 zusammengefasst. Ein Filtereinsatz 12 ist in der figürlich dargestellten Ausführungsform jeweils ein weitgehend ebenflächiges Gebilde, wobei die Fläche normal zur Durchströmrichtung 3 ausgerichtet ist. Die einzelnen Filterelemente 10 sind stabförmig mit einem rechteckigen Querschnitt ausgebildet, wobei die längere Rechteckseite quer zur Durchströmrichtung 3 ausgerichtet ist. Alternativ zu dieser streifenförmigen Ausbildung sind auch andere Formen, z.B. quadratische, dreieckige, sternförmige, kreiszylindrische oder ovale Querschnitte, möglich, womit insbesondere die in der Beschreibungseinleitung dargelegten Effekte erreicht werden können.

Die Filterträger 11 bilden eine Verbindung mehrerer Filterelemente 10, wobei in der dargestellten Ausführung jeweils die in einer Ebene rechtwinkelig zur Durchströmrichtung 3 angeordneten Filterelemente 10 zusammengefasst sind und somit genau eine Filtergruppe 8 in einem Filtereinsatz 12 enthalten ist. Die Filterelemente 10 einer Filteranordnung 7 können jedoch durch die Ausbildung der Filterträger 11 auf verschiedenste Weise zusammengefasst werden, z.B. indem die streifenförmigen Filterträger 11 in Durchströmrichtung 3 orientiert sind und Filterelemente 10 aus verschiedenen Filtergruppen 8 miteinander verbinden. Weiters ist es auch möglich, dass alle Filterelemente 10 mit einem Filterträger 11 zusammengefasst sind, wodurch die Filteranordnung 7 aus nur einem Filtereinsatz 12 gebildet ist.

Die Filterelemente 10 aus zwei hintereinanderliegenden Filtergruppen 8 sind in Durchströmrichtung 3 gesehen nicht in einer geraden Linie hintereinander angeordnet, sondern zueinander quer zur Durchströmrichtung 3 parallel versetzt. Im Ausführungsbeispiel gemäß Fig. 1 sind zwei baugleiche Filtereinsätze 12 gegeneinander um die Hälfte des Mittenabstandes 9 versetzt im Filtergehäuse 2 angeordnet, wodurch hintereinanderliegende Filterelemente 10 ebenfalls gegeneinander versetzt sind und hinter jeweils einem von zwei benachbarten Filterelementen 10 einer Filtergruppe 8 gebildeten Spalt mittig orientiert ein Filterelement 10 einer benachbarten Filtergruppe 8 liegt. Wenn die Breite der Filterelemente 10 wie im dargestellten Beispiel größer ist, als die Hälfte des Mittenabstandes 9, ist ein geradliniges Passieren der Filteranordnung 7 unmöglich und eine starke Umlenkung der durchströmenden Abluft erzwungen, was den Abscheideeffekt erhöht.

Die Filtereinsätze 12 können bei entsprechenden Abmessungen durch die Eintrittsöffnung 5 und/oder die Austrittsöffnung 6 bezogen auf die Durchströmrichtung axial in das Filtergehäuse 2 eingebracht werden, es ist jedoch zweckmäßig, wie im Ausführungsbeispiel dargestellt, im Filtergehäuse 2 eine eigene Einschuböffnung 13 für den bzw. die Filtereinsätze 12 vorzusehen. Die Einschuböffnung 13 ist so gestaltet, dass zwei aneinandergrenzende und gegeneinander versetzte Filterträger 11 mit geringem Spiel aufgenommen werden können. Alternativ, kann für jeden Filtereinsatz 12 eine separate Einschuböffnung 13 vorhanden sein, wodurch ein größerer Abstand zwischen hintereinanderliegenden Filtergruppen 8 entsteht. Die Einschuböffnung 13 bildet gleichzeitig ein Führungselement 14, indem es in der eingebauten Lage die Filtereinsätze 12 mit geringem Spiel aufnimmt und somit ihre Position festlegt.

Weitere Führungselemente 14 sind durch Ausnehmungen 15 im Filtergehäuse 2 gebildet, in die die freien Enden der Filterelemente 10 im eingebauten Zustand eingreifen. In vielen Fällen ist allerdings die Führung durch die Fixierung des Filterträgers 11 in der Einschuböffnung 13 ausreichend.

Zur Verbindung mehrerer Filtermodule 1 weist dieses an den Begrenzungswänden 4 mehrere Verbindungselemente 16 auf, die ein einfaches Zusammenstellen von größeren Filtervorrichtungen aus einzelnen Filtermodulen 1 gestatten. In Fig. 1 sind beispielhaft zwei Arten von Verbindungselementen 16 dargestellt, wobei an einem Filtermodul 1 verschiedene, aber auch ausschließlich gleiche Verbindungselemente 16 zum Einsatz kommen können. An den vertikalen Begrenzungswänden 4 sind jeweils eine vertikal orientierte Schwalbenschwanzschiene 17 und eine Schwalbenschwanznut 18 angeordnet, mit denen sich Filtermodule 1 in horizontaler Richtung verbinden lassen.

Zur Erweiterung in vertikaler Richtung sind an den horizontalen Begrenzungswänden 4 Bohrungen 19 angeordnet, in die nicht dargestellte Verbindungsbolzen eingebracht werden können und eine Verbindung von Filtermodulen 1 in vertikaler Richtung hergestellt werden kann.

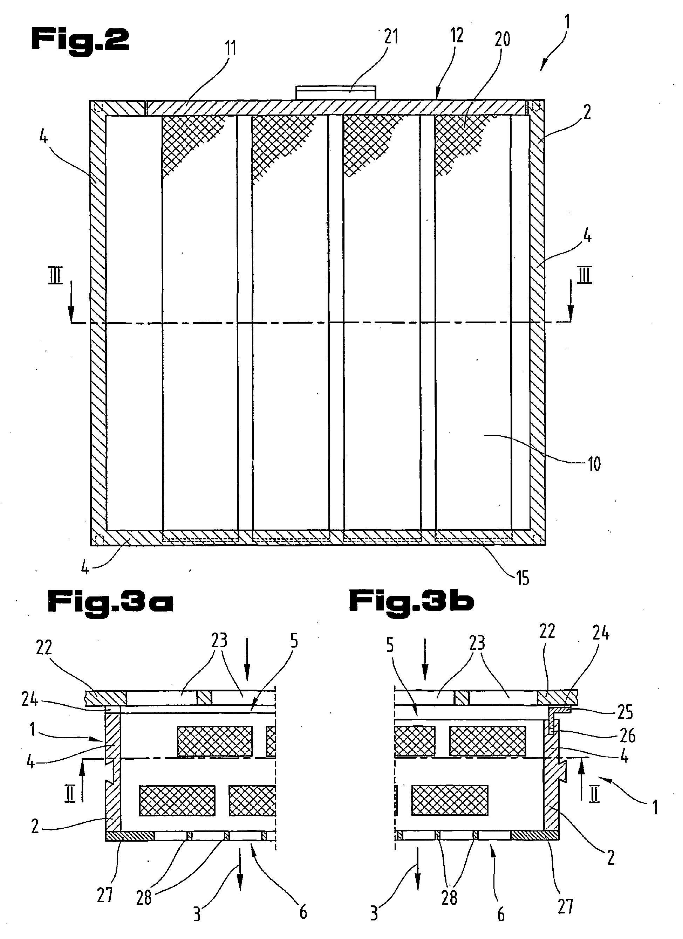

In Fig. 2 ist ein Filtermodul 1 im Aufriss geschnitten dargestellt, wobei ein im Filtergehäuse 2 eingesetzter Filtereinsatz 12 erkennbar ist. An den im Abluftstrom liegenden Filterelementen 10 ist ein Filtermedium 20 angeordnet, das durch eine abschnittsweise Schraffur angedeutet ist. Das Filtermedium 20 ist ein poröses Material, das in seinem Inneren Hohlräume und/oder Kapillaren aufweist und mit einer Flüssigkeit getränkt werden kann. Die Flüssigkeit ist ein Silikonöl Type AK 2000 der Fa. Wacker Chemie kann aber durch alle in der Beschreibungseinleitung genannten Flüssigkeiten ersetzt werden. Durch die enthaltenen Poren ist einerseits die wirksame Oberfläche des Filtermediums 20 gegenüber einer glatten Oberfläche stark vergrößert, gleichzeitig bilden die Poren das zur Speicherung der Flüssigkeit notwendige Volumen. Im Ausführungsbeispiel ist das Filtermedium 20 aus Polyesterfasern aufgebaut, die zu einem faserigen Verbund gepresst sind. Filtermedien dieser und ähnlicher Art sind beispielsweise bei Fa. Filtrona erhältlich. Es können selbstverständlich auch andere Materialien zum Aufbau des Filtermediums 20 verwendet werden. Die Festigkeit dieses Verbunds erlaubt es, das Filterelement 10 zur Gänze aus dem Material des Filtermediums 20 aufzubauen. Filterelement 10 und Filtermedium 20 sind also kostengünstig einstückig ausgebildet. Die Filterelemente 10 sind mit dem Filterträger 11 durch eine Presspassung verbunden und können durch einfaches Herausziehen und Einstecken getauscht werden.

Zum leichteren Ergreifen eines Filtereinsatzes 12 beim Herausnehmen aus dem Filtergehäuse 2 weist dieser jeweils ein Griffelement 21 auf.

Fig. 3 zeigt zwei Ausführungsbeispiele des Filtermoduls im Grundriss geschnitten. Dabei ist jeweils ein Filtermodul 1 an einem Maschinengehäuse 22 befestigt, und zwar in der Weise, dass die Eintrittsöffnung 5 des Filtergehäuses 2 in Verlängerung der Abluftöffnungen 23 der Maschine positioniert ist. Dazu ist das Filtergehäuse 2 mittels eines Befestigungselements 24 mit dem Maschinengehäuse 22 verbunden. Das Befestigungselement 24 ist im Ausführungsbeispiel durch ein Klettband mit zusammenwirkendem Flauschband und Hakenband gebildet, wobei das Hakenband mit dem Filtergehäuse 2, z.B. durch Kleben, verbunden ist und das Flauschband mit dem Maschinengehäuse 22 verbunden ist oder umgekehrt. In Fig. 3a ist das Befestigungselement 24 direkt an der Begrenzungswand 4 angeordnet, während in Fig. 3b das Befestigungselement 24 an einem winkelprofilartigen Ausgleichselement 25 angeordnet ist. Dieses ist an der der Maschine zugewandten Rückseite des Filtergehäuses 2 in einer Nut 26 gelagert, wodurch eine Verstellung des Abstandes zwischen Filtermodul 1 und Maschinengehäuse 22 möglich wird, indem ein Schenkel des Ausgleichselements 25 in der Nut 26 verschiebbar ist. Das Ausgleichselement 25 besitzt eine höhere Flexibilität als das gesamte Filtermodul 1 und kann sich daher leichter an Unebenheiten des Maschinengehäuses 22 anpassen, wodurch auch eine Befestigung an nicht ebenen Maschinengehäusen 22 möglich wird. Gleichzeitig ist durch das Ausgleichselement 25 ein seitliches Entweichen der Abluft zwischen Maschinengehäuse 22 und Filtermodul verhindert.

Über der Austrittsöffnung 6 des Filtergehäuses 2 ist ein Abdeckgitter 27 befestigt, das einerseits Schutz der Filterelemente vor unbeabsichtigter Berührung bietet, als auch durch die Ausführung der Gitterelemente 28 eine Beeinflussung des Abluftstromes ermöglicht.

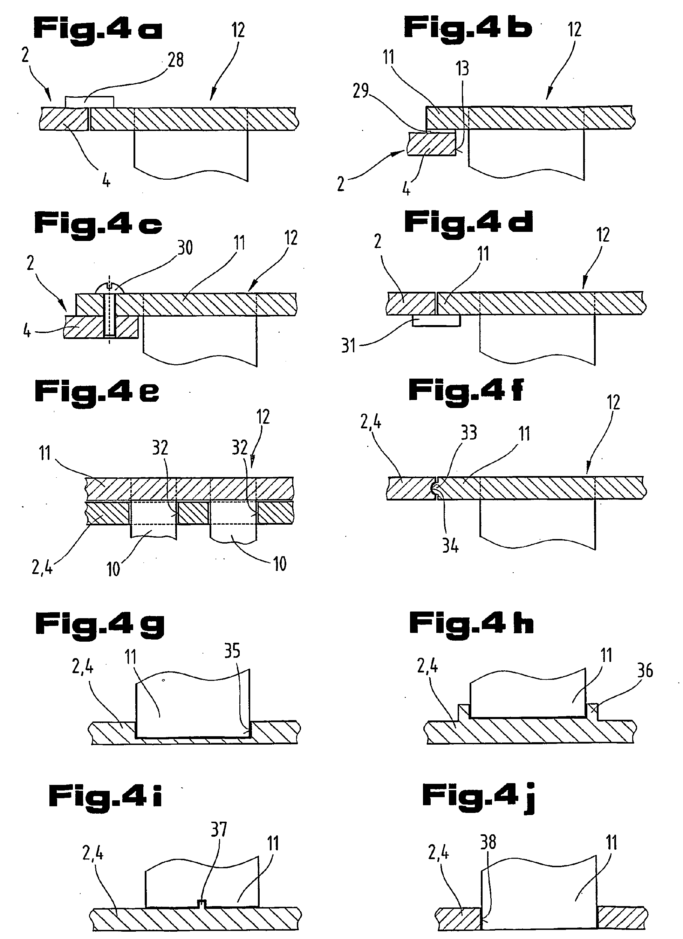

In den Figuren 4a bis 4f sind verschiedene Beispiele der Verbindung des Filterträgers 11 bzw. des Filtereinsatzes 12 mit dem Filtergehäuse 2 bzw. einer oberen Begrenzungswand 4 dargestellt.

Fig. 4a zeigt eine Verbindungslasche 28 die zwei benachbarte Kanten von Filtergehäuse 2 und Filterträger 11 überlappt und mit diesen lösbar, z. B. einem Klebefilm, verbunden ist.

Fig. 4b zeigt einen das Filtergehäuse 2 im Bereich der Einschuböffnung 13 überlappenden Filterträger 11, wobei im Überlappungsbereich ein lösbares Verbindungsmittel 29, z.B. ein mehrfach verwendbarer Haftfilm oder ein Klettband, angeordnet ist.

Fig. 4c zeigt ebenfalls eine überlappende Anordnung von Filterträger 11 und Filtergehäuse 2, wobei eine Verbindung durch eine Schraube 30 hergestellt ist.

Fig. 4d zeigt eine Ausführung, bei der der Filterträger 11 auf einer Tragleiste 31 aufliegt, die mit dem Filtergehäuse 2 verbunden ist. Die Tragleiste 31 kann als eigener Bauteil als auch einstückig mit dem Filtergehäuse 2 ausgebildet sein.

Fig. 4e zeigt eine Lösung, bei der die einzelnen Filterelemente 10 durch Öffnungen 32 in das Innere des Filtergehäuses 2 ragen und der Filterträger 11 auf dem Filtergehäuse 2 aufliegt.

Fig. 4f zeigt eine kraftschlüssige Schnappverbindung zwischen Filterträger 11 und Filtergehäuse 2, bei der ein balliger Rastvorsprung 33 am Filterträger 11 in der eingebauten Lage in eine Rastvertiefung 34 im Filtergehäuse eingreift.

Die Figuren 4g bis 4j zeigen Beispiele der Positionierung der Filterelemente 10 bzw. eines Filtereinsatzes 12 in Inneren des Filtergehäuses 2.

Fig. 4g zeigt eine Ausnehmung 35, in die ein Filterträger 11 eines Filtereinsatzes 12 hineinragt. Zum leichteren Einführen kann die Ausnehmung 35 eine nicht dargestellte Anschrägung aufweisen.

Fig. 4h zeigt eine buchsenförmige Aufnahme 36, die an der Innenseite einer Begrenzungswand 4 angeordnet ist. Diese kann einstückig von der Begrenzungswand 4 gebildet sein, oder aber auch als eigener Bauteil, der an der Begrenzungswand 4 befestigt ist.

Fig. 4i zeigt einen Positionierstift 37, der in eine Ausnehmung an der Stirnseite des Filterelements 10 bzw. des Filterträgers 11 ragt. Der Positionierstift 37 kann auch eine Spitze aufweisen, die insbesondere bei relativ weichen Filterelementen keine eigene Ausnehmung erfordert.

Fig. 4j zeigt als Führungselement für ein Filterelement 10 bzw. einen Filterträger 11 eine Durchsetzung 38 in einer Begrenzungswand 4.

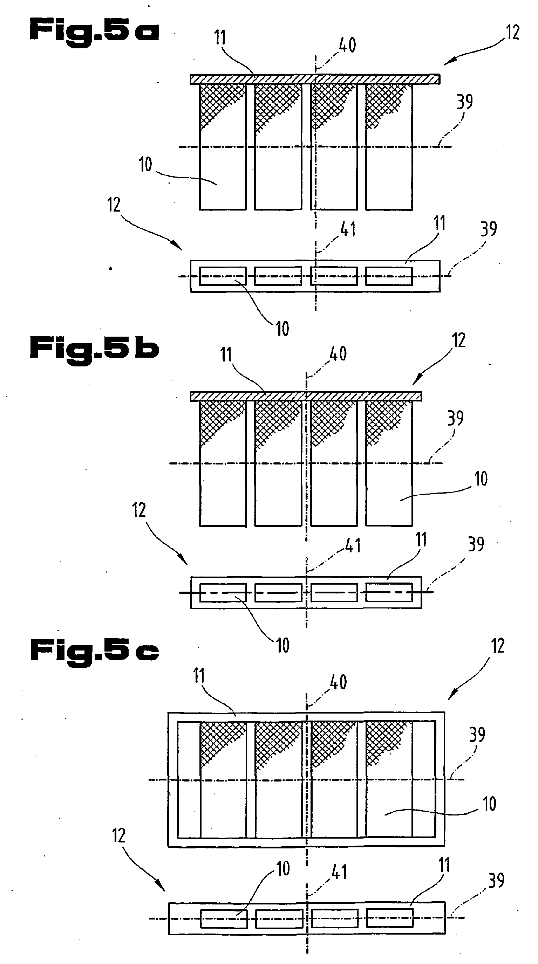

Verschiedene Ausführungsformen von Filtereinsätzen 12 sind in Fig. 5 jeweils vereinfacht in Aufriss und Grundriss dargestellt.

Fig. 5a zeigt einen Filtereinsatz 12 mit einer ausgeprägten Längsachse 39, einer Hochachse 40 und einer Querachse 41, umfassend einen Filterträger 11 und vier daran befestigte, zueinander parallele Filterelemente 10. Der Filtereinsatz 12 ist nur bezüglich einer Ebene, aufgespannt aus der Längsachse 39 und der Hochachse 40, symmetrisch. Bei zwei hintereinanderliegenden Filtereinsätzen 12 gemäß Fig. 5a kann der Versatz zwischen hintereinanderliegenden Filterelementen 10 durch eine halbe Drehung des Filtereinsatzes 12 um die Hochachse 40 erzielt werden, wobei die Filterträger 11 zueinander nicht versetzt sind.

Fig. 5b zeigt einen Filtereinsatz 12, mit zwei Symmetrieebenen, nämlich der Ebene aufgespannt von der Längsachse 39 und der Hochachse 40 sowie der Ebene aufgespannt von der Hochachse 40 und der Querachse 41. Um einen Versatz zwischen hintereinanderliegenden Filterelementen 10 zu erreichen, müssen hintereinanderliegende Filterträger 11 zueinander versetzt werden. Vorteilhaft an dieser Ausführung ist, dass einzelne Filtereinsätze 12 im Filtergehäuse 2 gewendet werden können, um die Abscheideflächen an Vorder- und Rückseite gleich auszunutzen und die Gebrauchsdauer zu verlängern.

Fig. 5c zeigt einen Filtereinsatz 12 mit einer dritten Symmetrieebene, aufgespannt von der Längsachse 39 und der Querachse 41. Dazu müssen beide Enden der Filterelemente 10 an einem Filterträger 11 befestigt sein. Dazu können zwei baugleiche Filterträger 11 oder ein rahmenförmiger Filterträger 11 verwendet werden.

In Fig. 6 sind zwei Ausführungsformen von Filterelementen 10 mit rechteckigem Querschnitt in vereinfachter, perspektivischer Darstellung enthalten.

Fig. 6a zeigt ein Filterelement 10 mit quaderförmigem Grundkörper. Von dessen Oberfläche ist nur ein Abschnitt des Filterelements 10 mit dem Filtermedium 20 versehen. Die freien Enden des Filterelements 10 können in dieser Ausführung leicht in einen Filterträger 11 eingepresst werden. Bei dieser unsymmetrischen Ausführung muss bei der Montage auf die Orientierung des Filtermediums 20 geachtet werden.

Fig. 6b zeigt ein quaderförmiges Filterelement 10, wobei sich das Filtermedium 20 über den gesamten Umfang erstreckt. Bei dieser Ausführung kann ein Filtereinsatz 12 gewendet werden, um die Gebrauchsdauer zu verlängern. Im Inneren des Filterelements 10 ist ein Magnetelement 42 aus einem Dauermagnet angeordnet, mit dem die Abscheidewirkung für ferromagnetische Partikel im Abluftstrom erhöht wird.

In Fig. 7 sind zwei Ausführungsformen von Filterelementen 10 mit kreisförmigem Querschnitt in vereinfachter, perspektivischer Darstellung enthalten.

Fig. 7a zeigt ein kreiszylindrisches Filterelement 10, das zur Gänze aus dem Filtermedium 20 gebildet ist. Innerhalb des porösen Filtermediums 20 ist die adsorbierende Flüssigkeit gespeichert und durch die Kapillarwirkung weitgehend gleichmäßig verteilt. Diese Ausführungsform ist sehr kostengünstig herzustellen.

Fig. 7b zeigt ein kreiszylindrisches Filterelement 10, umfassend einen kreiszylindrischen Behälter 43 mit an seinem äußeren Mantel angeordnetem Filtermedium 20. Dieses ist durch Öffnungen 44, z.B. feine Bohrungen oder Schlitze, mit dem Innenraum des Behälters 43 fluidverbunden. Der Behälter 43 dient als Speicher für die Flüssigkeit und gibt diese durch die Öffnungen 44 während der Gebrauchsdauer an das Filtermedium 20 ab.

In Fig. 8 ist eine weitere Variante zwei Filtermodule 1 zu verbinden dargestellt. Als Verbindungsmittel dient ein Klemmelement 45, das zwei Begrenzungswände 4 von zwei Filtergehäusen 2 bzw. Filtermodulen 1 kraftschlüssig verbindet. Das Klemmelement 45 ist als U-förmiges Profil ausgebildet, das über zwei benachbarte Kanten von zwei Begrenzungswänden 4 gesteckt ist. Das Klemmelement 45 wird dabei elastisch verformt und bewirkt durch die zwischen den Befestigungswänden 4 wirkende Kontaktkraft die kraftschlüssige Verbindung durch Reibung. Das Klemmelement 45 kann an der Vorderseite und/oder an der Rückseite des Filtergehäuses 2 eingesetzt werden. Wird die Klemmverbindung nur an einer Seite verwendet, kann sich bei Krafteinwirkung auf der anderen Seite zwischen den Begrenzungswänden 4 ein Abstand einstellen - der Verbund aus mehreren Filtermodulen 1 erlangt dadurch eine gewisse Flexibilität zur Anpassung an nicht ebene Maschinengehäuse 22.

Der Ordnung halber sei abschließend darauf hingewiesen, dass zum besseren Verständnis des Aufbaus des Filtermoduls 1 dieses bzw. dessen Bestandteile teilweise unmaßstäblich und/oder vergrößert und/oder verkleinert dargestellt wurden.

Die Ausführungsbeispiele zeigen mögliche Ausführungsvarianten des Filtermoduls 1, wobei an dieser Stelle bemerkt sei, dass die Erfindung nicht auf die speziell dargestellten Ausführungsvarianten desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Vor allem können die einzelnen in den Fig. 1 bis 8 gezeigten Ausführungen den Gegenstand von eigenständigen, erfindungsgemäßen Lösungen bilden. Die diesbezüglichen, erfmdungsgemäßen Aufgaben und Lösungen sind den Detailbeschreibungen dieser Figuren zu entnehmen.

### Bezugszeichenaufstellung

- 1: Filtermodul
- 2: Filtergehäuse
- 3: Durchströmrichtung
- 4: Begrenzungswand
- 5: Eintrittsöffnung

- 6: Austrittsöffnung
- 7: Filteranordnung
- 8: Filtergruppe
- 9: Mittenabstand
- 10: Filterelement

- 11: Filterträger
- 12: Filtereinsatz
- 13: Einschuböffnung
- 14: Führungselement
- 15: Ausnehmung

- 16: Verbindungselement
- 17: Schwalbenschwanzschiene
- 18: Schwalbenschwanznut
- 19: Bohrung
- 20: Filtermedium

- 21: Griffelement
- 22: Maschinengehäuse
- 23: Abluftöffnung
- 24: Befestigungselement
- 25: Ausgleichselement

- 26: Nut
- 27: Abdeckgitter
- 28: Verbindungslasche
- 29: Verbindungsmittel
- 30: Schraube

- 31: Tragleiste
- 32: Öffnung
- 33: Rastvorsprung
- 34: Rastvertiefung
- 35: Ausnehmung

- 36: Aufnahme
- 37: Positionierstift
- 38: Durchsetzung
- 39: Längsachse
- 40: Hochachse

- 41: Querachse
- 42: Magnetelement
- 43: Behälter
- 44: Öffnung
- 45: Klemmelement

## Patentansprüche

1. Filtermodul (1) zur Abscheidung von luftfremden Inhaltsstoffen aus Maschinenabluft, umfassend
ein Filtergehäuse (2) mit einer Eintrittsöffnung (5) und einer Austrittsöffnung (6) zur Durchleitung von Maschinenabluft, zumindest ein Befestigungselement (24) zur Befestigung des Filtermoduls (1) an einer Maschine und eine im Filtergehäuse (2) angeordnete Filteranordnung (7) aus zumindest zwei in Durchströmrichtung (3) hintereinander liegenden Filtergruppen (8) aus stabförmigen, zueinander in einem gleichbleibenden Mittenabstand (9) parallel sowie zu ihrer Längsachse weitgehend quer zur Durchströmrichtung (3) angeordneten Filterelementen (10) mit einem Filtermedium (20), wobei die Filterelemente (10) zweier benachbarter Filtergruppen (8) zueinander parallel sind und quer zu ihren Längsachsen und zur Durchströmrichtung (3) relativ zueinander versetzt angeordnet sind, **dadurch gekennzeichnet dass** die Filterelemente (10) einer Filteranordnung mit zwei oder mehreren Filterträgern (11) zu zwei oder mehreren Filtereinsätzen verbunden sind, wobei die Filtereinsätze (12) mit dem Filtergehäuse (2) lösbar verbunden sind, so dass, die einzelnen Filtergruppen dadurch unabhängig voneinander ausgetauscht werden können.

2. Filtermodul (1) nach Anspruch 1, **dadurch gekennzeichnet, dass** die Filterelemente (10) zweier in Durchströmrichtung (3) hintereinanderliegender Filtergruppen (8) zueinander um die Hälfte des Mittenabstandes (9) quer zu ihren Längsachsen und zur Durchströmrichtung (3) versetzt angeordnet sind.

3. Filtermodul (1) nach einem der Ansprüche 1 bis 2, **dadurch gekennzeichnet, dass** das Filtergehäuse (2) zumindest eine Einschuböffnung (13) zum Einschieben der Filtereinsätze (12) quer zur Durchströmrichtung (3) aufweist.

4. Filtermodul (1) nach einem der Ansprüche 1 bis 3, **dadurch gekennzeichnet, dass** am Filtergehäuse (2) zumindest ein Führungselement (14) zur Positionierung der Filtereinsätze (12) im eingebauten Zustand ausgebildet ist.

5. Filtermodul (1) nach den Ansprüchen 3 und 4, **dadurch gekennzeichnet, dass** das Führungselement (14) durch die Einschuböffnung (13) gebildet ist.

6. Filtermodul (1) nach den Ansprüche 3 und 4, **dadurch gekennzeichnet, dass** das zumindest eine Führungselement (14) durch eine gegenüber der Einschuböffnung (13) angeordnete Ausnehmung (15) oder Durchsetzung im Filtergehäuse (2) gebildet ist.

7. Filtermodul (1) nach einem der Ansprüche 1 bis 6, **dadurch gekennzeichnet, dass** die Führungselemente (14) für jeweils zwei in Durchströmrichtung (3) hintereinanderliegende Filtereinsätze (12) quer zu den Längsachsen der Filterelemente (10) und der Durchströmrichtung (3) zueinander versetzt angeordnet sind.

8. Filtermodul (1) nach einem der Ansprüche 1 bis 7, **dadurch gekennzeichnet, dass** die Filtereinsätze (12) einer Filteranordnung (7) baugleich sind.

9. Filtermodul (1) nach einem der Ansprüche 1 bis 8, **dadurch gekennzeichnet, dass** die Filtereinsätze (12) eine, zwei oder drei Symmetrieebenen aufweisen.

10. Filtermodul (1) nach einem der Ansprüche 1 bis 9, **dadurch gekennzeichnet, dass** innerhalb einer Filtergruppe (8) die in eine Ebene normal auf die Durchströmrichtung (3) projizierte Fläche der Filterelemente (10) größer ist, als die in eine Ebene normal auf die Durchströmrichtung (3) projizierte, freie Durchtrittsfläche zwischen den Filterelementen (10).

11. Filtermodul (1) nach einem der Ansprüche 1 bis 10, **dadurch gekennzeichnet, dass** die Filterelemente (10) mit dem Filterträger (11) lösbar verbunden sind.

12. Filtermodul (1) nach Anspruch 11, **dadurch gekennzeichnet, dass** die Filterelemente (10) mit dem Filterträger (11) mittels einer Presspassung verbunden sind.

13. Filtermodul (1) nach einem der Ansprüche 1 bis 12, **dadurch gekennzeichnet, dass** die Filterelemente (10) ein Filtermedium (20) aus einer Gruppe umfassend poröses Material, faseriges Gewebe, Zellstoffmaterial und/oder Kunststoffschaum, aufweisen.

14. Filtermodul (1) nach einem der Ansprüche 1 bis 13, **dadurch gekennzeichnet, dass** das Filtermedium (20) und die Filterelemente (10) aus dem gleichem Material bestehen.

15. Filtermodul (1) nach Anspruch 14, **dadurch gekennzeichnet, dass** das Filtermedium (20) und Filterelement (10) einstückig ausgebildet sind.

16. Filtermodul (1) nach einem der Ansprüche 1 bis 14, **dadurch gekennzeichnet, dass** das Filtermedium (20) jeweils nur an einem Teilabschnitt der Filterelemente (10) angeordnet ist.

17. Filtermodul (1) nach einem der Ansprüche 1 bis 16, **dadurch gekennzeichnet, dass** das Filtermedium (20) jeweils an der Oberfläche der Filterelemente (10) angeordnet ist.

18. Filtermodul (1) nach einem der Ansprüche 1 bis 17, **dadurch gekennzeichnet, dass** ein Bestandteil des Filtermediums (20) eine Flüssigkeit aus der Gruppe Glyzerin, Silikonöl, ätherisches Öl, Paraffinöl und/oder Latexemulsion ist.

19. Filtermodul (1) nach einem der Ansprüche 1 bis 18, **dadurch gekennzeichnet, dass** die Flüssigkeit eine olfaktorische Substanz enthält.

20. Filtermodul (1) nach einem der Ansprüche 1 bis 19, **dadurch gekennzeichnet, dass** die Flüssigkeit eine antibakterielle, antivirale, antimykotische oder fungizide Substanz enthält.

21. Filtermodul (1) nach einem der Ansprüche 1 bis 20, **dadurch gekennzeichnet, dass** die Flüssigkeit biologisch abbaubar ist.

22. Filtermodul (1) nach einem der Ansprüche 1 bis 21, **dadurch gekennzeichnet, dass** das Filtermedium (20) eine antibakterielle, -virale, -mykotische und/oder funigzide Oberfläche aufweist.

23. Filtermodul (1) nach einem der Ansprüche 1 bis 22, **dadurch gekennzeichnet, dass** die Filterelemente (10) Hohlräume zur Aufnahme der Flüssigkeit aufweisen, die durch Öffnungen (44), wie z.B. Bohrungen oder Schlitze, mit dem Filtermedium (20) fluidverbunden sind.

24. Filtermodul (1) nach einem der Ansprüche 1 bis 23, **dadurch gekennzeichnet, dass** das Filtermedium (20) zumindest teilweise aus Aktivkohle gebildet ist.

25. Filtermodul (1) nach einem der Ansprüche 1 bis 24, **dadurch gekennzeichnet, dass** das Filterelement (10) ein Magnetelement (42) oder einen magnetischen Bestandteil umfasst.

26. Filtermodul (1) nach einem der Ansprüche 1 bis 25, **dadurch gekennzeichnet, dass** die Filterelemente (10) einen länglichen Querschnitt aufweisen.

27. Filtermodul (1) nach Anspruch 26, **dadurch gekennzeichnet, dass** die Längsachse des Querschnitts quer zur Durchströmrichtung (3) ausgerichtet ist.

28. Filtermodul (1) nach einem der Ansprüche 1 bis 27, **dadurch gekennzeichnet, dass** die Filterelemente (10) einen viereckigen, dreieckigen, stemförmigen oder runden Querschnitt aufweisen.

29. Filtermodul (1) nach einem der Ansprüche 1 bis 28, **dadurch gekennzeichnet, dass** das Befestigungselement (24) durch eine Klebstoffschicht, ein Klebeband, ein Klettband, eine Schraube, einen Steckbolzen, einen Schnappverbinder oder ein sonstiges Befestigungsmittel gebildet ist.

30. Filtermodul (1) nach einem der Ansprüche 1 bis 29, **dadurch gekennzeichnet, dass** das Befestigungselement (24) im Bereich der Eintrittsöffnung (5) des Filtergehäuses (2) angeordnet ist.

31. Filtermodul (1) nach einem der Ansprüche 1 bis 30, **dadurch gekennzeichnet, dass** an der der Maschine zugewandten Rückseite des Filtergehäuses (2) eine Nut (26) ausgebildet ist, dass in die Nut (26) ein winkelprofilartiges Ausgleichselement (25) eingesteckt ist und dass das Ausgleichselement (25) mittels des Befestigungselements (24) an der Maschine befestigt ist.

32. Filtermodul (1) nach einem der Ansprüche 1 bis 31, **dadurch gekennzeichnet, dass** das Filtergehäuse (2) zumindest ein Verbindungselement (16) zur Verbindung mit einem oder mehreren weiteren Filtermodulen (1) aufweist.

33. Filtermodul (1) nach einem der Ansprüche 1 bis 32, **dadurch gekennzeichnet, dass** das Verbindungselement (16) durch einen Steckbolzen, eine Befestigungsschiene bzw. Befestigungsnut, eine Schwalbenschwanzverbindung (17, 18) oder eine Klettverbindung gebildet ist.

34. Filtermodul (1) nach einem der Ansprüche 1 bis 32, **dadurch gekennzeichnet, dass** das Verbindungselement (16) durch ein zwei Kanten der Begrenzungswände (4) zweier Filtergehäuse (2) umfassendes Klemmelement (45) gebildet ist.

35. Filtermodul (1) nach einem der Ansprüche 1 bis 34, **dadurch gekennzeichnet, dass** der Filtereinsatz (12) am Filterträger (11) ein Griffelement (21) aufweist.

36. Filtermodul (1) nach einem der Ansprüche 1 bis 35, **dadurch gekennzeichnet, dass** das Filtergehäuse (2), der Filterträger (11) und/oder die Filterelemente (10) aus Kunststoffspritzguss gebildet sind.

37. Filtermodul (1) nach einem der Ansprüche 1 bis 36, **dadurch gekennzeichnet, dass** die lösbare Verbindung zwischen Filtereinsatz (12) und Filtergehäuse (2) durch eine kraftschlüssige Schnappverbindung, z.B. mit einem in eine Rastvertiefung (34) im Filtergehäuse (2) eingreifenden Rastvorsprung (33), am Filtereinsatz (12) gebildet ist.

38. Filtermodul (1) nach einem der Ansprüche 1 bis 37, **dadurch gekennzeichnet, dass** an der Austrittsöffnung (6) des Filtergehäuses (2) ein Abdeckgitter (27) angeordnet ist.

## Claims

1. A filter module (1) for the separation of air contaminants from machine exhaust air, including
a filter housing (2) with an inlet opening (5) and an outlet opening (6) for the passage of machine exhaust air, at least one fixing element (24) for fixing the filter module (1) to a machine and a filter arrangement (7) provided in the filter housing (2), comprising at least two filter groups (3) one behind the other in the direction of flow (3), made up of rod-shaped parallel filter elements (10) with a constant mean separation (9) and with the longitudinal axis thereof largely perpendicular to the direction of flow (3) with a filter medium (20), whereas the filter elements (10) of two adjacent filter groups (8) are parallel to each other and are arranged at an offset to each other perpendicular to the longitudinal axes thereof and to the direction of flow (3), **characterised in that** the filter elements (10) of a filter arrangement are connected by two or several filter supports (11) to two or several filter inserts, whereas the filter inserts (12) are detachably connected, so that the various filter groups can thus be replaced independently from one another.

2. A filter module (1) according to claim 1, **characterised in that** the filter elements (10) of two filter groups (8) situated behind one another in the direction of flow (3) are arranged at an offset to each other by half the mean separation (9) perpendicular to the longitudinal axes thereof and to the direction of flow (3).

3. A filter module (1) according to one of the claims 1 to 2, **characterised in that** the filter housing (2) contains at least one slide-in opening (13) for sliding in the filter inserts (12) crosswise to the direction of flow (3).

4. A filter module (1) according to one of the claims 1 to 3, **characterised in that** at least one guiding element (14) is provided on the filter housing (2) for positioning the filter inserts (12) when mounted.

5. A filter module (1) according to the claims 3 and 4, **characterised in that** the guiding element (14) is formed by the slide-in opening (13).

6. A filter module (1) according to the claims 3 and 4, **characterised in that** said at least one guiding element (14) is formed by a recess (15) arranged opposite the slide-in opening (13) or of an interspersion in the filter housing (2).

7. A filter module (1) according to one of the claims 1 to 6, **characterised in that** the guiding elements (14) are arranged at an offset to one another for respectively two filter inserts (12) situated behind one another, crosswise to the longitudinal axes of the filter elements (10) and the direction of flow (3).

8. A filter module (1) according to one of the claims 1 to 7, **characterised in that** the filter inserts (12) of a filter arrangement (7) have the same design.

9. A filter module (1) according to one of the claims 1 to 8, **characterised in that** the filter inserts (12) have one, two or three planes of symmetry.

10. A filter module (1) according to one of the claims 1 to 9, **characterised in that** inside a filter group (8) the projected surface of the filter elements (10) is larger in a plane normal to the direction of flow (3) than the free penetration surface between the filter elements (10) projected in a plane normal to the direction of flow (3).

11. A filter module (1) according to one of the claims 1 to 11, **characterised in that** the filter elements (10) are detachably connected to the filter support (11).

12. A filter module (1) according to claim 11, **characterised in that** the filter elements (10) are connected to the filter support (11) by means of a pressed fit.

13. A filter module (1) according to one of the claims 1 to 10, **characterised in that** the filter elements (10) have a filter medium (20) from a group comprising porous material, fibrous fabric, pulp material and/or plastic material.

14. A filter module (1) according to one of the claims 1 to 13, **characterised in that** the filter medium (20) and the filter elements (10) consist of the same material.

15. A filter module (1) according to claim 14, **characterised in that** the filter medium (20) and the filter element (10) are formed as a single piece.

16. A filter module (1) according to one of the claims 1 to 15, **characterised in that** the filter medium (20) is respectively arranged only one portion of the filter elements (10).

17. A filter module (1) according to one of the claims 1 to 16, **characterised in that** the filter medium (20) is respectively arranged on the surface of the filter elements (10).

18. A filter module (1) according to one of the claims 1 to 17, **characterised in that** a constituent of the filter medium (20) is a liquid from the group composed of glycerin, silicon oil, etheric oil, paraffin oil and/or latex emulsion.

19. A filter module (1) according to one of the claims 1 to 18, **characterised in that** the liquid contains an olfactory substance.

20. A filter module (1) according to one of the claims 1 to 19, **characterised in that** the liquid contains an antibacterial, antiviral, antimycotic or fungicidal substance.

21. A filter module (1) according to one of the claims 1 to 20, **characterised in that** the liquid is bio-degradable.

22. A filter module (1) according to one of the claims 1 to 21, **characterised in that** the filter medium (20) has an antibacterial, antiviral, antimycotic or fungicidal surface.

23. A filter module (1) according to one of the claims 1 to 22, **characterised in that** the filter elements (10) contain cavities for receiving the liquid, which are fluidly connected through openings (44), such as for instance bores or slits, to the filter medium (20).

24. A filter module (1) according to one of the claims 1 to 23, **characterised in that** the filter medium (20) is formed at least partially of active carbon.

25. A filter module (1) according to one of the claims 1 to 24, **characterised in that** the filter element (10) contains a magnetic element (42) or a magnetic constituent.

26. A filter module (1) according to one of the claims 1 to 25, **characterised in that** the filter elements (10) have an elongated cross-section.

27. A filter module (1) according to claim 26, **characterised in that** the longitudinal axis of the cross-section is directed crosswise to the direction of flow (3).

28. A filter module (1) according to one of the claims 1 to 27, **characterised in that** the filter elements (10) have a square, triangular, star-shaped or round cross-section.

29. A filter module (1) according to one of the claims 1 to 28, **characterised in that** the fastening device (24) is formed of an adhesive layer, an adhesive tape, a velcro, a screw, a socket pin, a snap fastener or any other fastening means.

30. A filter module (1) according to one of the claims 1 to 29, **characterised in that** the fastening element (24) is arranged in the area of the inlet opening (5) of the filter housing (2).

31. A filter module (1) according to one of the claims 1 to 30, **characterised in that** a groove (26) is formed on the back of the filter housing (2) pointing to the machine, that an angular-profiled compensation element (25) is inserted into the groove (26) and that the compensation element (25) is attached to the machine by means of the fastening element (24).

32. A filter module (1) according to one of the claims 1 to 31, **characterised in that** the filter housing (2) has at least one connection element (16) for connection with one or several additional filter modules (1).

33. A filter module (1) according to one of the claims 1 to 32, **characterised in that** the connection element (16) is formedd of a socket pin, a fixing rail or a fixing groove, a dovetail connection (17, 18) or a velcro connection.

34. A filter module (1) according to one of the claims 1 to 32, **characterised in that** the connection element (16) is formed of a clamping member (45) containing two edges of the limiting walls (4) of two filter housing (2).

35. A filter module (1) according to one of the claims 1 to 34, **characterised in that** the filter insert (12) has a grip element (21) on the filter support (11).

36. A filter module (1) according to one of the claims 1 to 35, **characterised in that** the filter housing (2), the filter support (11) and/or the filter elements (10) are formed by plastic injection moulding.

37. A filter module (1) according to one of the claims 1 to 36, **characterised in that** the detachable connection between filter insert (12) and filter housing (2) is formed on the filter insert (12) of a snap-on connection in a friction locking manner, for example with a catch projection (33) meshing with a catch recess (34) in thee filter housing (2).

38. A filter module (1) according to one of the claims 1 to 37, **characterised in that** a covering grid (27) is arranged on the outlet opening (6) of the filter housing (2).

## Revendications

1. Module filtrant (1) destiné à séparer des substances étrangères contenues dans l'air vicié d'une machine, comprenant
un boîtier de filtre (2) pourvu d'une ouverture d'entrée (5) et d'une ouverture de sortie (6) pour le passage de l'air vicié d'une machine, au moins un élément de fixation (24) servant à fixer le module filtrant (1) sur une machine ainsi qu'un ensemble filtrant (7) disposé dans le boîtier de filtre (2), constitué d'au moins deux groupes filtrants (8) placés l'un derrière l'autre dans le sens de passage (3), lesquels groupes étant constitués d'éléments filtrants (10) sous forme de barres parallèles et à entraxe constant (9) et dont l'axe longitudinal est largement perpendiculaire au sens de passage (3), pourvus d'un moyen filtrant (20), lesdits éléments filtrants (10) de deux groupes filtrants (8) adjacents étant parallèles l'un à l'autre et placés de manière décalée les uns par rapport aux autres, perpendiculairement à leurs axes longitudinaux et au sens de passage (3), **caractérisé en ce que** les éléments filtrants (10) d'un ensemble filtrant sont reliés par deux ou plusieurs supports de filtre (11) à deux ou plusieurs cartouches filtrantes, lesdites cartouches filtrantes (12) étant reliés de manière amovible au boîtier de filtre (2), de sorte que les divers groupes filtrants peuvent ainsi être remplacés indépendamment l'un de l'autre.

2. Module filtrant (1) selon la revendication 1, **caractérisé en ce que** les éléments filtrants (10) de deux groupes filtrants (8) placés l'un derrière l'autre sont décalés l'un par rapport à l'autre de la moitié de l'entraxe (9) perpendiculairement à leurs axes longitudinaux et au sens de passage (3).

3. Module filtrant (1) selon l'une quelconque des revendications 1 à 2, **caractérisé en ce que** le boîtier de filtre (2) présente au moins une ouverture d'insertion (13) pour l'insertion des cartouches filtrantes (12) perpendiculairement au sens de passage (3).

4. Module filtrant (1) selon l'une quelconque des revendications 1 à 3, **caractérisé en ce qu'**au moins un élément de guidage (14) est prévu une fois encastré pour le positionnement des cartouches filtrantes (12) au niveau du boîtier de filtre (2).

5. Module filtrant (1) selon les revendications 3 et 4, **caractérisé en ce que** l'élément de guidage (14) est formé par l'ouverture d'insertion (13).

6. Module filtrant (1) selon les revendications 3 et 4, **caractérisé en ce que** ledit au moins élément de guidage (14) est formé par un évidement (15) disposé en face de l'ouverture d'insertion (13) ou par un interstice dans le boîtier de filtre (2).

7. Module filtrant (1) selon l'une quelconque des revendications 1 à 6, **caractérisé en ce que** les élément de guidages (14) sont décalés l'un par rapport à l'autre pour respectivement deux cartouches filtrantes (12) placées l'une derrière l'autre dans le sens de passage (3) perpendiculairement aux axes longitudinaux des éléments filtrants (10) et du sens de passage (3).

8. Module filtrant (1) selon l'une quelconque des revendications 1 à 7, **caractérisé en ce que** les cartouches filtrantes (12) d'un ensemble filtrant (7) sont de construction identique.

9. Module filtrant (1) selon l'une quelconque des revendications 1 à 8, **caractérisé en ce que** les cartouches filtrantes (12) comportent un, deux ou trois plans de symétrie.

10. Module filtrant (1) selon l'une quelconque des revendications 1 à 9, **caractérisé en ce qu'**au sein d'un groupe filtrant (8) la surface projetée des éléments filtrants (10) dans un plan orthogonal au sens de passage est supérieure à la surface de pénétration libre entre les éléments filtrants (10), projetée dans un plan orthogonal au sens de passage (3).

11. Module filtrant (1) selon l'une quelconque des revendications 1 à 11, **caractérisé en ce que** les éléments filtrants (10) sont reliés de manière amovible au support de filtre (11).

12. Module filtrant (1) selon la revendication 11, **caractérisé en ce que** les éléments filtrants (10) sont reliés au support de filtre (11).

13. Module filtrant (1) selon l'une quelconque des revendications 1 à 10, **caractérisé en ce que** les éléments filtrants (10) présentent un moyen filtrant (20) sélectionné parmi le groupe composé d'un matériau poreux, d'un tissu fibreux, d'un matériau cellulaire et/ou d'une mousse synthétique.

14. Module filtrant (1) selon l'une quelconque des revendications 1 à 13, **caractérisé en ce que** le moyen filtrant (20) et les éléments filtrants (10) se composent du même matériau.

15. Module filtrant (1) selon la revendication 14, **caractérisé en ce que** le moyen filtrant (20) et l'élément filtrant (10) forment un seul bloc.

16. Module filtrant (1) selon l'une quelconque des revendications 1 à 15, **caractérisé en ce que** le moyen filtrant (20) n'est prévu respectivement que sur une portion des éléments filtrants (10).

17. Module filtrant (1) selon l'une quelconque des revendications 1 à 16, **caractérisé en ce que** le moyen filtrant (20) est prévu respectivement à la surface des éléments filtrants (10).

18. Module filtrant (1) selon l'une quelconque des revendications 1 à 17, **caractérisé en ce qu'**une composante du moyen filtrant (20) est un liquide sélectionné dans le groupe consistant en glycérine, huile de silicium, huile éthérique, huile de paraffine et/ou émulsion de latex.

19. Module filtrant (1) selon l'une quelconque des revendications 1 à 18, **caractérisé en ce que** le liquide contient une substance olfactive.

20. Module filtrant (1) selon l'une quelconque des revendications 1 à 19, **caractérisé en ce que** le liquide contient une substance antibactérienne, antivirale, antimycotique ou fongicide.

21. Module filtrant (1) selon l'une quelconque des revendications 1 à 20, **caractérisé en ce que** le liquide est biodégradable.

22. Module filtrant (1) selon l'une quelconque des revendications 1 à 21, **caractérisé en ce que** le moyen filtrant (20) présente une surface antibactérienne, antivirale, antimycotique et/ou fongicide.

23. Module filtrant (1) selon l'une quelconque des revendications 1 à 22, **caractérisé en ce que** les éléments filtrants (10) présentent des cavités permettant de recevoir le liquide, cavités reliées de façon fluide au moyen filtrant (20) par des ouvertures (44), comme par exemple des alésages ou des fentes.

24. Module filtrant (1) selon l'une quelconque des revendications 1 à 23, **caractérisé en ce que** le moyen filtrant (20) est composé au moins partiellement de charbon actif.

25. Module filtrant (1) selon l'une quelconque des revendications 1 à 24, **caractérisé en ce que** l'élément filtrant (10) contient un élément magnétique (42) ou une composante magnétique.

26. Module filtrant (1) selon l'une quelconque des revendications 1 à 25, **caractérisé en ce que** les éléments filtrants (10) présentent une section transversale de forme allongée.

27. Module filtrant (1) selon la revendication 26, **caractérisé en ce que** l'axe longitudinal de la section transversale est disposée perpendiculairement au sens de passage (3).

28. Module filtrant (1) selon l'une quelconque des revendications 1 à 27, **caractérisé en ce que** les éléments filtrants (10) présentent une section transversale carrée, triangulaire, en forme d'étoile ou ronde.

29. Module filtrant (1) selon l'une quelconque des revendications 1 à 28, **caractérisé en ce que** l'élément de fixation (24) est constitué d'une couche d'adhésif, d'un ruban adhésif, d'une bande velcro, d'une vis, d'un axe débrochable, d'une fixation rapide ou de tout autre moyen de fixation.

30. Module filtrant (1) selon l'une quelconque des revendications 1 à 29, **caractérisé en ce que** l'élément de fixation (24) est prévu dans la zone de l'ouverture d'entrée (5) du boîtier de filtre (2).

31. Module filtrant (1) selon l'une quelconque des revendications 1 à 30, **caractérisé en ce qu'**une gorge (26) est prévue au dos du boîtier de filtre (2) dirigé vers la machine, qu'un élément de compensation (25) de profil angulaire est inséré dans la gorge (26) et que l'élément de compensation (25) est fixé sur la machine à l'aide de l'élément de fixation (24).

32. Module filtrant (1) selon l'une quelconque des revendications 1 à 31, **caractérisé en ce que** le boîtier de filtre (2) présente au moins un élément de connexion (16) pour se connecter à un ou plusieurs modules filtrants supplémentaires (1).

33. Module filtrant (1) selon l'une quelconque des revendications 1 à 32, **caractérisé en ce que** l'élément de connexion (16) est constitué d'un axe débrochable, d'un rail de fixation ou d'une gorge de fixation, d'une connexion en queue d'aronde (17, 18) ou d'une connexion velcro.

34. Module filtrant (1) selon l'une quelconque des revendications 1 à 32, **caractérisé en ce que** l'élément de connexion (16) est constitué d'un élément de serrage (45) comprenant deux tranches des murs de séparation (4) de deux boîtiers de filtre (2).

35. Module filtrant (1) selon l'une quelconque des revendications 1 à 34, **caractérisé en ce que** la cartouche filtrante (12) comporte un élément de préhensions (21) au niveau du support de filtre (11).

36. Module filtrant (1) selon l'une quelconque des revendications 1 à 35, **caractérisé en ce que** le boîtier de filtre (2), le support de filtre (11) et/ou les éléments filtrants (10) se composent de matériau synthétique moulé par injection.

37. Module filtrant (1) selon l'une quelconque des revendications 1 à 36, **caractérisé en ce que** la connexion amovible entre la cartouche filtrante (12) et le boîtier de filtre (2) est constituée, au niveau de la cartouche filtrante (12), d'une fixation rapide par liaison de force, par exemple une saillie d'encliquetage (33) engrenant un retrait d'encliquetage (34) dans le boîtier de filtre (2).

38. Module filtrant (1) selon l'une quelconque des revendications 1 à 37, **caractérisé en ce qu'**une grille de protection (27) est disposée au niveau de l'ouverture de sortie (6) du boîtier de filtre (2).
